# EUROPEAN PATENT SPECIFICATION

(11) **EP 2 618 210 B1**
(45) Date of publication and mention of the grant of the patent: **22.04.2020**
(21) Application number: 11855140.7
(22) Date of filing: 07.12.2011
(51) Int. Cl.: G02F 1/061, B41M 5/20, G02F 1/153, G02F 1/15

(54) **ELECTRONIC PRINTABLE MEDIUM, METHOD FOR PRINTING ON ELECTRONIC PRINTABLE MEDIUM AND SYSTEM COMPRISING ELECTRONIC PRINTABLE MEDIUM AND ELECTRONIC PRINT DEVICE**
BEDRUCKBARES ELEKTRONISCHES MEDIUM, VERFAHREN ZUR BEDRUCKUNG DES BEDRUCKBAREN ELEKTRONISCHEN MEDIUMS UND SYSTEM MIT EINEM BEDRUCKBAREN ELEKTRONISCHEN MEDIUM UND EINER ELEKTRONISCHEN DRUCKVORRICHTUNG
SUPPORT IMPRIMABLE ÉLECTRONIQUE, PROCÉDÉ D'IMPRESSION SUR SUPPORT IMPRIMABLE ÉLECTRONIQUE ET SYSTEME COMPRENANT UN SUPPORT IMPRIMABLE ÉLECTRONIQUE ET DISPOSITIF D'IMPRESSION ÉLECTRONIQUE

(30) Priority: 04.01.2011 JP 2011000032
(43) Date of publication of application: 24.07.2013
(73) Proprietor: National Institute for Materials Science, Tsukuba-shi, Ibaraki 305-0047 (JP)
(72) Inventor: HIGUCHI Masayoshi, Tsukuba-shi Ibaraki 305-0047 (JP); ZHANG Jian, Tsukuba-shi Ibaraki 305-0047 (JP)
(74) Representative: V.O.
(86) International application number: PCT/JP2011/078316
(87) International publication number: WO 2012/093547

(56) References cited:
- WO-A1-2010/147017
- JP-A- 11 183 944
- JP-A- 2007 112 957
- JP-A- 2009 223 159
- JP-A- 2009 265 437

## Description

### [Technical Field]

The present invention relates to an electronic printable medium, a method of printing on an electronic printable medium, and a system comprising an electronic printable medium and an electronic print device.

In particular, the present invention relates to a medium, an apparatus and a method of printing by allowing an organic-metallic hybrid polymer to exhibit a color.

Priority is claimed on Japanese Patent Application No. 2011-000032, filed January 4, 2011.

### [Background Art]

A so-called electronic paper has always been studied and proposed, which is provided us an appearance and a usability other than that of a display device such as a liquid crystal display. Specifically, an electronic paper has an electronic writable property and an electronic erasable property, as well as a normal display device, however, it does not require energy such as electric power in order to maintain a displayed data on an electronic paper, as well as a paper on which data are printed or written. Furtheremore, an electronic paper also has the same properties as a paper in that it can be rounded.

Examples of operating principle of the electronic paper which has already been proposed include a principle due to particle movement, a principle due to phase change, a principle due to heat-sensitive dye, and a principle due to liquid crystal. However, the electronic papers operated in accordance with these principles have a complicated structure, and therefore, there is a problem that it is difficult to process into a thin medium and that a high cost is required. On the other hand, if an electronic paper has a simple structure, there is a problem that it is difficult to display a data in a color.

### [Citation List]

### [Patent Documents]

Patent Document 1: PCT International Publication WO 2007/049371
Patent Document 2: Japanese Unexamined Patent Application, First Publication No. 2007-112769
Patent Document 3: Japanese Unexamined Patent Application, First Publication No. 2007-112957
Patent Document 4: PCT International Publication WO 2008/081762
Patent Document 5: Japanese Unexamined Patent Application, First Publication No. 2008-162967
Patent Document 6: Japanese Unexamined Patent Application, First Publication No. 2008-162976
Patent Document 7: Japanese Unexamined Patent Application, First Publication No. 2008-162979
Patent Document 8: PCT International Publication WO 2008/143324
Patent Document 9: Japanese Unexamined Patent Application, First Publication No. 2009-223159
Patent Document 10: Japanese Unexamined Patent Application, First Publication No. 2009-265437
Patent Document 11: WO2010/147017 discloses a display element comprising a pattern display layer containing an organic-inorganic hybrid polymer, a layer containing a polymer gel electrolyte, a substrate having a back electrode and a transparent substrate having a surface electrode that convers the pattern display layer.

### [Summary of Invention]

### [Technical Problem]

The present invention has an object of providing an electronic printable medium, a method of printing on an electronic printable medium, and a system comprising an electronic printable medium and an electronic print device which solves the aforementioned problems of the prior art, and which has a simple structure and displays a data in color without requiring complicated structure.

### [Solution to Problem]

[1] According to one aspect of the present invention, there is provided an electronic printable medium as defined in claim 1.
   In the electronic printable medium, the conductive sheet-shaped member may have conductivity by itself.
[2] According to an another aspect of the present invention, there is provided a method of printing on electronic printable medium as defined in claim 3.
[3] According to another aspect, the present invention provides a system comprising an electronic printable medium and an electronic print device as defined in claim 5.
[4] According to another aspect, the present invention provides a system comprising an electronic printable medium and an electronic print device as defined in claim 6.

### [Advantageous Effects of Invention]

The present invention is capable of providing an electronic printable medium, a method of printing on an electronic printable medium and a system comprising an electronic printable medium and an electronic print device which have a simple structure and a simple procedure, by using an organic-metallic hybrid polymer.

As a result, a medium which has an electronical printability and usability as well as a paper medium, and which can be provide at a low cost.

Furthermore, the present invention is capable of color printing without requiring a complicated structure.

### [Brief Description of the Drawings]

FIG. 1 is a cross-sectional view of the electronic printable medium of the present invention.
FIG. 2 is a cross-sectional view of the electronic printable medium of the present invention.
FIG. 3 is a cross-sectional view of the electronic print device of the present invention.
FIG. 4 is a cross-sectional view of the electronic print device of the present invention.
FIG. 5 is a process showing the method of printing on the electronic printable medium of one example of the present invention.
FIG. 6 is a photograph showing a printing process using the electronic printable medium of one example of the present invention, and showing the printed state and the deleted state of the electronic printable medium of the present invention.

### [Description of Embodiments]

An organic-metallic hybrid polymer including a metal ion and bisterpyridine has a specific characteristic of color change based on the metal-to-ligand charge transfer (MLCT) absorption. In the present invention, this property of organic-metallic hybrid polymer is applied to an electronic printable medium.

In the present specification, the term "organic-metallic hybrid polymer" refers to a polymer prepared by complexation of an organic molecule with two terpyridyl groups and a metal ion to thereby have a structure in which organic molecules and metal ions are bonded alternately along the main chain.

The organic-metallic hybrid polymer is a series of polymers represented by the following general formula (I) or (II).

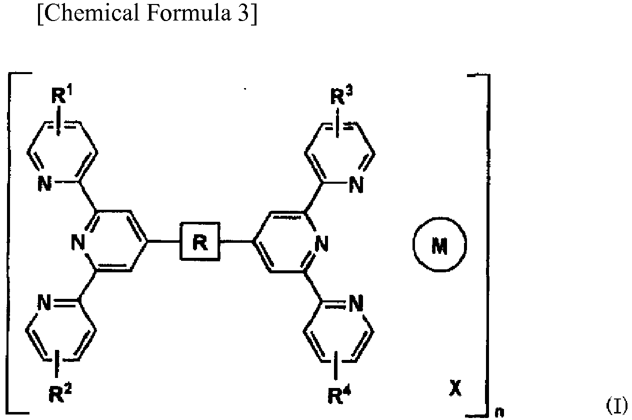

In the formula, M represents a metal ion; X represents a counter anion; R represents a spacer containing a carbon atom and a hydrogen atom, or a spacer directly connecting two terpyridyl groups; each of R¹ to R⁴ independently represents a hydrogen atom or a substituent; and n represents an integer of 2 or more which indicates a degree of polymerization.

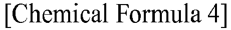

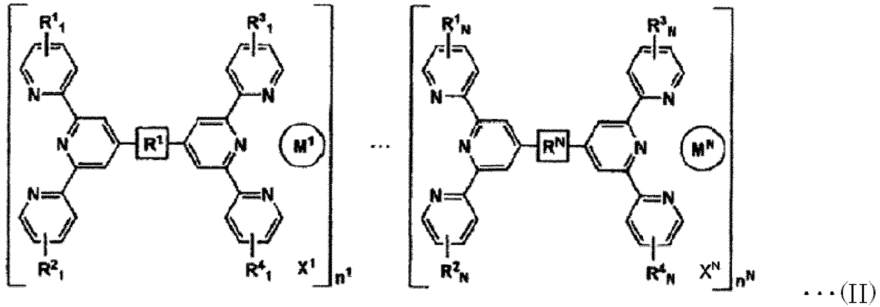

In the formula, each of M¹ to M^{N} (wherein N represents an integer of 2 or more) independently represents a metal ion; each of X¹ to X^{N} (wherein N represents an integer of 2 or more) independently represents a counter anion, each of R¹ to R^{N} (wherein N represents an integer of 2 or more) independently represents a spacer containing a carbon atom and a hydrogen atom, or a spacer directly connecting two terpyridyl groups; each of R¹₁ to R¹_{N}, R²₁ to R²_{N}, R³₁ to R³_{N}, and R⁴₁ to R⁴_{N} (wherein N represents an integer of 2 or more) independently represents a hydrogen atom or a substituent; and each of n¹ to n^{N} (wherein N represents an integer of 2 or more) independently represents an integer of 2 or more which indicates a degree of polymerization.

Further, in any of the above general formula, the metal ion of the organic-metallic hybrid polymer is at least one metal ion selected from the group consisting of an iron ion, a cobalt ion, a nickel ion, a zinc ion, and a ruthenium ion. Furthermore, the counter anion of the organic-metallic hybrid polymer is at least one anion selected from the group consisting of an acetate ion, a chloride ion, a hexafluorophosphate ion, a tetrafluoroborate ion, and a polyoxometalate.

The organic-metallic hybrid polymer represented by the general formula (I) and general formula (II) used in the present invention is constituted of a bis(terpyridine) derivative, a metal ion and a counter anion.

Further, by complexation of a bis(terpyridine) derivative exhibiting coordination properties and a metal ion, a polymer complex which is in a state where the bis(terpyridine) derivative and the metal ion are alternately connected is formed.

The organic-metallic hybrid polymer exhibits a color based on the charge-transfer absorption from the metal to the bis(terpyridine) derivative as a ligand. In other words, when the organic-metallic hybrid polymer is electrochemically oxidized, the color of the polymer disappears. On the other hand, when the organic-metallic hybrid polymer in this colorless state is electrochemically reduced, the state of the polymer reverts to the colored state. These phenomena can be caused repeatedly.

As shown in Patent Documents 1 and 3, in the general formula (II), when each of the metal ions M¹ to M^{N} represents a different metal ion (specifically, iron ion, cobalt ion, nickel ion, zinc ion or the like), the organic-metallic hybrid polymer can exhibit a plurality of colors. That is, since these metal ions have a different charge transfer rate between the metal ion and a ligand, each of these metal ions exhibits a different color. When the combination of metal ions having a different charge transfer rate is used, metal ions M¹ to M^{N} are not limited to the above-mentioned metal ions.

In addition, since each of these metal ions has a different redox potential, by controlling the electric potential, only a color based on a specific metal ion can be exhibited. Therefore, according to the organic-metallic hybrid polymer having the aforementioned structure, appearance or disappearance of a plurality of colors can be easily controlled by controlling the electric potential.

R in the general formula (I) and R¹ to R^{N} in the general formula (II) represent spacers for connecting two terpyridyl groups. By selecting the type of spacer, the angle of the pyridyl groups of the organic-metallic hybrid polymer can be arbitrarily set, and material design of the organic-metallic hybrid polymer can be achieved.

With respect to the spacer, one having two terpyridyl groups directly connected (namely, a single bond) may be used, although a divalent organic group containing a carbon atom and a hydrogen atom can be used. Examples of such divalent organic groups include aliphatic hydrocarbon groups, alicyclic hydrocarbon groups, aromatic hydrocarbon groups and heterocyclic groups. Of these, arylene groups such as a phenylene group and a biphenylene group are preferred. In addition, these divalent organic groups may have a substituent, including an alkyl group such as a methyl group, an ethyl group, or a hexyl group; an alkoxy group such as a methoxy group or a butoxy group; or a halogen atom such as chlorine or bromine. Moreover, such spacers may further contain an oxygen atom or a sulfur atom. Since the oxygen atom or sulfur atom has a modifying ability, it is advantageous for the material design of the organic-metallic hybrid polymer.

Preferred examples of the spacers include divalent arylene groups represented by the following formulae (1) to (11).

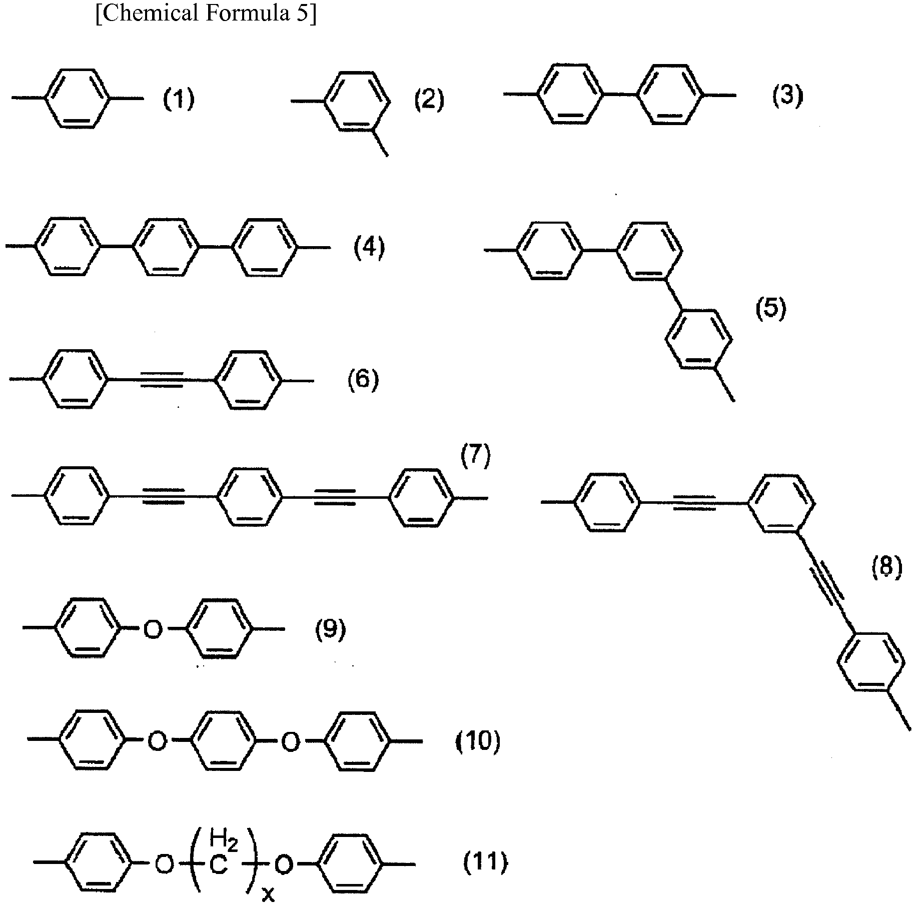

As the aliphatic hydrocarbon groups constituting the spacer, saturated or unsaturated hydrocarbon groups can be mentioned. Specific examples thereof include C₁-C₆ alkyl groups (and more specifically, an alkyl group such as a methyl group, an ethyl group, an n-propyl group, an i-propyl group, an n-butyl group and a t-butyl group) from which one hydrogen atom has been removed. Specific examples of hydrocarbon groups containing an unsaturated bond include a group which one hydrogen atom has been removed from an unsaturated hydrocarbon group such as an ethylene group, a propylene group, a butene group, a pentene group, a hexene group, an acetylene group, a propyne group, a butyne group, a pentyne group, a hexyne group and a diacetylene group. Such a spacer may have an oxygen atom or a sulfur atom. Furthermore, as the divalent organic group constituting the spacer, these groups having a substituent, including an alkyl group, such as a methyl group, an ethyl group, or a hexyl group; an alkoxy group such as a methoxy group or a butoxy group; or a halogen atom such as chlorine or bromine, may be used. The spacer is preferably a saturated or unsaturated hydrocarbon group of 2 to 6 carbon atoms, more preferably a group which one hydrogen atom has been removed from an ethyl group, an n-butyl group or an acetylene group.

Examples of the metal ions represented by M in the general formula (I) and M¹ to M^{N} in the general formula (II) include transition metal ions such as an iron ion, a cobalt ion, a nickel ion, a zinc ion and a ruthenium ion. Of these, the metal ion is preferably a metal ion having a structure of six coordination sites, and more preferably an iron ion, a cobalt ion or a ruthenium ion. These metal ions not only can change the valence thereof due to a reduction reaction, but also individually have different redox potentials from each other when incorporated in the organic-metallic hybrid polymer represented by the above formula (I).

Examples of the counter anions represented by X in the general formula (I) and X¹ to X^{N} in the general formula (II) include anions such as an acetate ion, a chloride ion, a hexafluorophosphate ion, a tetrafluoroborate ion, a perchlorate ion, and a polyoxometalate. Of these, low-coordinating anions are preferable, and an acetate ion, a tetrafluoroborate ion, a perchlorate ion or a polyoxometalate is more preferred. The charge of metal ions is compensated by the counter anion, thereby making the organic-metallic hybrid polymer electrically neutral.

In the general formula (I), n is preferably from 2 to 10,000, and more preferably from 10 to 1,000.

In the general formula (II), n is preferably from 2 to 10,000, and more preferably from 10 to 1,000. N is preferably from 2 to 10, and more preferably from 2 to 5.

The organic-metallic hybrid polymer can be applied as a solution which is prepared by dissolving this in an organic solvent. Examples of such solvents include methanol, ethanol, propanol, isopropanol and n-butanol. These solvents may be used alone, or two or more types thereof may be mixed for use. In particular, a mixture of methanol and isopropanol is preferred. The mixing ratio of methanol and isopropanol is preferably from 1:100 to 100:1, and more preferably from 2:1 to 1:2. As a result, the effect of improving the film formability can be achieved.

In addition, the concentration of the organic-metallic hybrid polymer solution is preferably from 0.1 to 100 mmol/L, and more preferably from 1 to 10 mmol/L. By virtue of the above-mentioned range, the effect of improving the film formability can be achieved.

Moreover, the thickness of the organic-metallic hybrid polymer film is preferably from 5 to 3,000 nm, and more preferably from 30 to 300 nm. By virtue of the above-mentioned range, sufficient contrast as a display and quick color change can be achieved.

For example, during the production of organic-metallic hybrid polymer represented by the general formula (I), it is possible to use a method in which a bisterpyridine derivative and a metal salt are refluxed for about 24 hours at 150°C in acetic acid or methanol. The reflux conditions may vary depending on the selected type of spacer or metal salt, although it is possible for those skilled in the art to easily select the optimum conditions.

After synthesizing the organic-metallic hybrid polymer by the method as described above, the mixture obtained by reflux may be heated to evaporate the solvent, thereby forming a powder. The powder has, for example, a purple color or the like, and is in the reduced state. Because such a powder easily dissolves in methanol, it is easy to handle.

In addition, the organic-metallic hybrid polymer represented by the general formula (II) can be produced, for example, by a method including a step of refluxing each of the bisterpyridine derivatives corresponding to the 1st to Nth represented by the general formula (II) and each of the metal salts corresponding to the 1st to Nth individually in acetic acid and methanol, and a step of mixing together the 1st to Nth (wherein N represents an integer of 2 or more) reaction products obtained in the above step.

The organic-metallic hybrid polymer itself is a known substance and is described in detail, for example, in Patent Documents 1 to 10. Hence, further descriptions therefore will be omitted.

Because the organic-metallic hybrid polymer is highly stable and reliable, is easy to process, and can easily form a uniform thin film on the medium surface, it is a much more suitable material for electronic printable medium than other organic or inorganic substances which had been conventionally used as an electronic paper.

Hereinafter, an electronic printable medium which is formed using an organic-metallic hybrid polymer, an apparatus for printing on the medium and a method of printing on the electronic printable medium are specifically described.

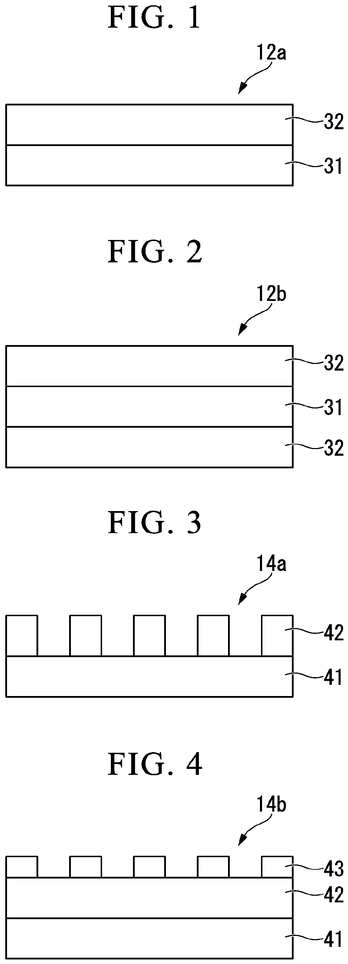

In principle, as shown in Figure 3 of Patent Document 3, the configuration of an electrochromic device which is formed using the aforementioned organic-metallic hybrid polymer is a configuration in which a laminated body composed of the organic-metallic hybrid polymer and a gel electrolyte layer has been sandwiched between two electrode layers. By virtue of such a configuration, coloration and decoloration can be conducted due to reversible charge transfer between the metal and the ligand as described above.

In contrast, the basic configuration of an electronic printable medium of the present invention is a configuration in which the aforementioned organic-metallic hybrid polymer is thinly deposited on a sheet-shaped member having conductivity.

FIG. 1 is a cross-sectional view of the electronic printable medium 12a of the present invention. In the electronic printable medium 12a, an organic-metallic hybrid polymer 32 is deposited on a conductive sheet-shaped member 31.

FIG. 2 is a cross-sectional view of the electronic printable medium 12b of the present invention. In the electronic printable medium 12b, an organic-metallic hybrid polymer is deposited on both side of a conductive sheet-shaped member 31.

That is, the medium has a configuration in which a gel electrolyte layer and an electrode layer on the side of the gel electrolyte layer have been removed from the configuration of the aforementioned conventional electrochromic device.

An electronic print device for printing on the medium has a gel electrolyte layer and an electrode layer which have been removed from the configuration of the electrochromic device, as a base configuration. Specifically, the apparatus has a configuration in which a gel electrolyte layer is exposed on the surface of the device where an electronic printable medium is to be stacked, such that the exposed gel electrolyte layer corresponds to a pattern to be printed.

FIG. 3 is a cross-sectional view of the electronic print device 14a of the present invention. In the electronic print device 14a, an electrode layer 41 is selectively covered with a gel electrolyte layer 42 such that the gel electrolyte layer 42 corresponds to a pattern.

FIG. 4 is a cross-sectional view of the electronic print device 14b of the present invention. In the electronic print device 14b, an electrode layer 41 is covered with a gel electrolyte layer 42, and the gel electrolyte layer 42 is covered with an insulating material 43 such that the gel electrolyte layer corresponds to the pattern.

By virtue of having such a configuration as described above, two advantages can be obtained as follows.

First, the medium of the present invention has a configuration which is a half size of the configuration of the electrochromic device which is formed by using an organic-metallic hybrid polymer having a simple configuration. Therefore, it is possible to obtain an electronic printable medium having a simpler configuration than that of the electrochromic device. As a result, it is possible to progress the reduction of cost and thickness of the medium. Furthermore, it is possible to allow an electronic printable medium to have a convenience and usability like as a conventional paper medium.

Secondary, since the upper side of the electronic print device has the aforementioned pattern on the surface thereof, a signal corresponding to a pattern to be printed does not need to be supplied from the outside in some way during electronical printing on the medium. That is, by simply supplying a predetermined voltage to the electrode layer on the side of the electronic print device, the transfer of the pattern is simultaneously conducted over the entire contact portion of the device and medium. Therefore, in the process of electronical printing on a medium, it is not necessary to supply each data to be printed to a print device and to perform pattern formation each time, unlike in a normal printing in which a printed material can be provided with high throughput by setting a "plate" to a printing machine and passing a large number of leaf or roll paper through the printing machine. As a result, the configuration of the electronic print device and the controlling process thereof can be simplified.

The sheet-shaped member having conductivity may be a sheet-shaped member in which a polymer sheet or the other sheet has been coated with metal or other conductive material, or a sheet-shaped member having conductivity by itself (e.g., a sheet-shaped member in which the entire material has conductivity or a sheet-shaped member in which a material having a high conductivity has been mixed with a material having a low conductivity to give conductivity to the sheet-shaped member).

When electronical printing is conducted by using an electronic print device, the surface to be printed of the electronic printable medium is allowed to come into contact with the surface of the gel electrolyte layer of the electronic print device in a sheet manner, that is, in a two-dimensional manner. Furthermore, by placing the surface of the gel electrolyte layer on a rotating drum which has been conventionally used in a normal printing device such as an electronic copy machine or a laser printer, the surface of the gel electrolyte layer is allowed to come into contact with the surface to be printed of the electronic printable medium in a linear manner, that is, in an one-dimensional manner.

As described above, with respect to the organic-metallic hybrid polymer represented by the general formula (II), by virtue of using a plurality of metal ions having a various redox potential, coloration can be achieved by controlling voltage applied between the conductive sheet-shaped member on the side of electronic printable medium and the conductive layer on the side of electronic print device, such that only a color based on a specific metal ion is exhibited.

It is noted that just by simply applying a voltage in a state in which both entire surfaces are allowed to come into contact with each other, the entire medium exhibits the same colors. However, in the case where different colors have to be exhibited on each portion, it is necessary to apply a voltage corresponding to the target color to each portion where a color should be exhibited. This coloration can be achieved by a method of applying a voltage to each portion, instead of applying a voltage in two-dimensional manner or in one-dimensional voltage manner. Alternatively, when configuring an electronic print device depending on a specific pattern corresponding to a pattern to be electronically printed, the resistance of the gel electrolyte layer may be controlled in each portion.

With respect to the portion where a terminal by which the conductive layer of the electronic printing medium is connected with an external electrode is placed, a region where an organic-metallic hybrid polymer does not presented can be provided as a most simple configuration. It is not necessary to ensure a large terminal region, because a large current does not flow during electronical printing, but in the case where the terminal is provided not to stand out as much as possible, the conductive layer may be routed to the back surface of the medium to place the terminals on the back surface. In the case where the thickness of the medium is more than a certain extent, a terminal region may be provided on the side of the medium. In a medium which is used to transfer a pattern from a rotating drum during electronical printing, when a structure in which a plurality of terminals is arranged in a direction parallel to the direction to which a medium is fed, or a linear terminal arranged in the direction is provided, the configuration of the electronic print device for applying a voltage to the electronic printable medium is simplified.

Furthermore, by depositing an organic-metallic hybrid polymer on both surfaces of the electronic printable medium, a medium capable of printing on both surfaces thereof, can be provided. When printing on both surfaces of the medium is conducted using such a medium, printing on each surface of the medium may be conducted. Alternatively, when a voltage is simultaneously applied to both surfaces of the medium through each gel electrolyte layer which has an independent pattern and is placed on the both surfaces of the medium, printing of a pattern on one surface does not affect on printing of a different pattern on the other surface.

The polymer gel electrolyte to be used herein is a gel electrolyte using an organic solvent and a polymer. As the electrolyte used in the polymer gel electrolyte, preferred is a compound which is soluble in an organic solvent and which has a satisfactory electrical conductivity (0.2 S/m or more), such as a lithium salt, a sodium salt, a potassium salt, or an ammonium salt, and examples of such compounds include lithium perchlorate, lithium tetrafluoroborate, lithium hexafluorophosphate, lithium trifluorosulfate, lithium hexafluoroarsenate, ammonium perchlorates, such as tetrabutylammonium perchlorate, tetraethylammonium perchlorate, and tetrapropylammonium perchlorate, and ammonium hexafluorophosphates, such as tetrabutylammonium hexafluorophosphate, tetraethylammonium hexafluorophosphate, and tetrapropylammonium hexafluorophosphate. Of these, lithium perchlorate, lithium tetrafluoroborate, lithium hexafluorophosphate or tetrabutylammonium perchlorate is preferred.

As the organic solvent, for example, an organic solvent having a boiling point within the range of 120 to 300°C can be used, so that after an electrolyte is formed, the organic solvent can remain in the electrolyte without causing volatilization. Examples of such organic solvents include propylene carbonate, ethylene carbonate, ethylmethyl carbonate, diethyl carbonate, dimethyl carbonate, butylene carbonate, γ-butyrolactone, tetramethylurea, sulfolane, dimethyl sulfoxide, 1,3-dimethyl-2-imidazolidinone, 2-(N-methyl)-2-pyrrolidinone, hexamethylphosphoric triamide, N-methylpropionamide, N,N-dimethylacetamide, N-methylacetamide, N,N-dimethylformamide, N-methylformamide, butyronitrile, propionitrile, acetonitrile, acetylacetone, 4-methyl-2-pentanone, 2-butanol, 1-butanol, 2-propanol, 1-propanol, acetic anhydride, ethyl acetate, ethyl propionate, dimethoxyethane, diethoxyfuran, tetrahydrofuran, ethylene glycol, diethylene glycol, triethylene glycol monobutyl ether, tricresyl phosphate, 2-ethylhexyl phosphate, dioctyl phthalate and dioctyl sebacate.

Of these, a cyclic carboxylate ester-based compound, such as propylene carbonate, ethylene carbonate, ethylmethyl carbonate, diethyl carbonate, dimethyl carbonate, butylene carbonate, or γ-butyrolactone, is preferably used.

As the polymer for dispersing the electrolyte, a polymer that dissolves or swells (gels) by the addition of the above-mentioned organic solvent is preferred, and examples thereof include polymethacrylate esters, such as polymethyl methacrylate, polyethyl methacrylate, polybutyl methacrylate, polycyclohexyl methacrylate and polyphenyl methacrylate; and polycarbonates. Of these, polymethacrylate esters are preferred, and polymethyl methacrylate is more preferred.

### [Examples]

Hereafter, the present invention will be described in more detail based on the examples.

### [Production of electronic printable medium]

The electronic printable medium 12 of the present invention is not particularly limited to the example, and can be provided by covering a PET layer, which has been covered with an ITO, with the aforementioned organic-metallic hybrid polymer.

With respect to the method of covering a PET layer, which has been covered with an ITO, with the organic-metallic hybrid polymer, a solution in which the organic-metallic hybrid polymer is dissolved in methanol or propanol to obtain a mixed solution of 1:1 ratio, is adhered to a PET layer, which has been covered with an ITO, by spin coat or by applying, followed by drying, thereby forming an organic-metallic hybrid polymer layer having an uniform thickness.

### [Production of electronic printing device]

The electronic printing device 14 of the present invention can be provided, for example, in the following manner.

Firstly, an electrolyte mainly containing polymethyl methacrylate (PMMA), LiClO₄, and propylene carbonate which are dissolved in acetonitrile, is prepared.

Next, the obtained electrolyte is deposited on the substrate covered with an ITO thin film. There are following two methods to deposit the electrolyte.
a) A method in which a mold having a specific shape to put the electrolyte solution therein can be mentioned.
   In this method, after drying the electrolyte solution, a gel electrolyte layer having the specific shape can be formed.
b) A method in which the electrolyte solution is deposited on entire surface of a substrate without controlling the shape to be the final shape. In this method, after drying the electrolyte solution to form a gel electrolyte layer, as shown in FIG. 4, a part of the surface of the gel electrolyte layer is covered with a material having insulation properties (i.e., insulating material 43), such that color change of the organic-metallic hybrid polymer used in the medium can be prevented. The material used for covering may be a template composed of a plastic piece or paper in which a pattern to be electronically printed on the side of medium has been provided. Alternatively, in the case where such a covering is conducted on-demand, it is possible to print an insulating material having a desired shape on the surface of the gel electrolyte layer, for example, by using inkjet techniques.

### [Method of printing on electronic printable medium using electronic printable medium and electronic print device]

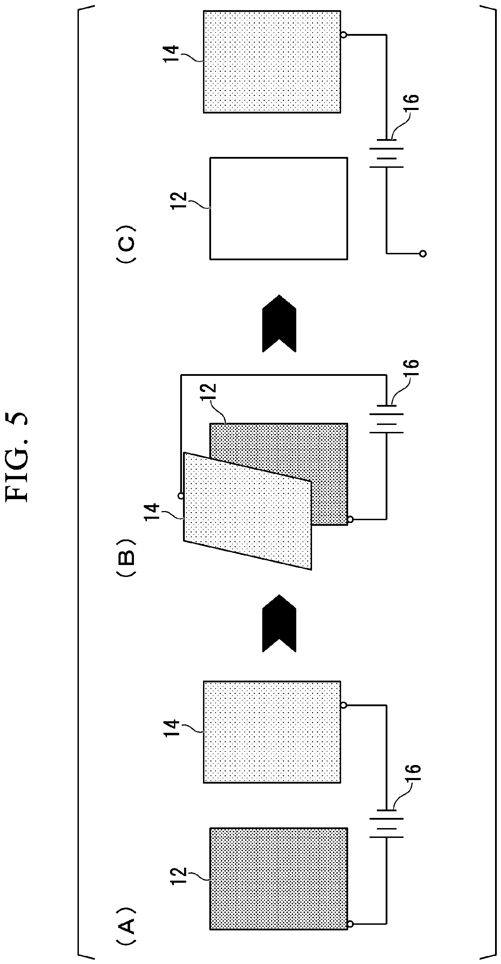

Firstly, as shown in FIG. 5(A), the terminal which has been connected to a conductive sheet-shaped member (not shown) of the aforementioned electronic print medium 12 is connected to the positive output of the power supply 16. The power supply 16 can supply DC voltage of 3V. On the other hand, the terminal which has been connected to a conductive layer (not shown) of the electronic print device 14 is connected to the negative output of the power supply 16.

Next, as shown in FIG. 5(B), the electronic printable medium 12 and the electronic print device 14 are stacked such that the surface of the organic-metallic hybrid polymer faces the surface of the gel electrolyte layer, and these surfaces are allowed to come into contact with each other satisfactorily. As a result, in the organic-metallic hybrid polymer of the electronic print medium 12, color change occurs only at a portion of the surface contacted with the surface of the gel electrolyte layer, thereby conducting transfer of the pattern to be printed which has been set on the electronic print device, that is, conducting electronic printing. After completing the electronic printing, as shown in FIG. 5(C), the power supply 16 is turned off, and the electronic printable medium 12 and the electronic print device are separated from each other.

It should be noted that in the case where an electronic print is conducted in multiple colors as described above, the output voltage of the power supply should be controlled such that the desired color can be obtained.

### [Method of deleting pattern electronically printed]

With respect to a method of deleting the pattern which has been electronically printed on the electronic printable medium in the aforementioned manner to return the electronic printable medium to the state prior to printing, the printed medium has only to be allowed to stand. Alternatively, in the case where deleting of the pattern has to be conducted before disappearance of the color is naturally completed, for example, when the printed medium has to be reused, the printed portion of the organic-metallic hybrid polymer of the medium is allowed to come into contact with the same kind of electrolyte as those used during electronic printing (without applying a voltage), thereby accelerating deleting of the color.

As a result, in the case where the electronic printable medium is reused, such a step for deleting of the color can be conducted prior to the step (A) in the process of electronic printing indicated in FIG. 5.

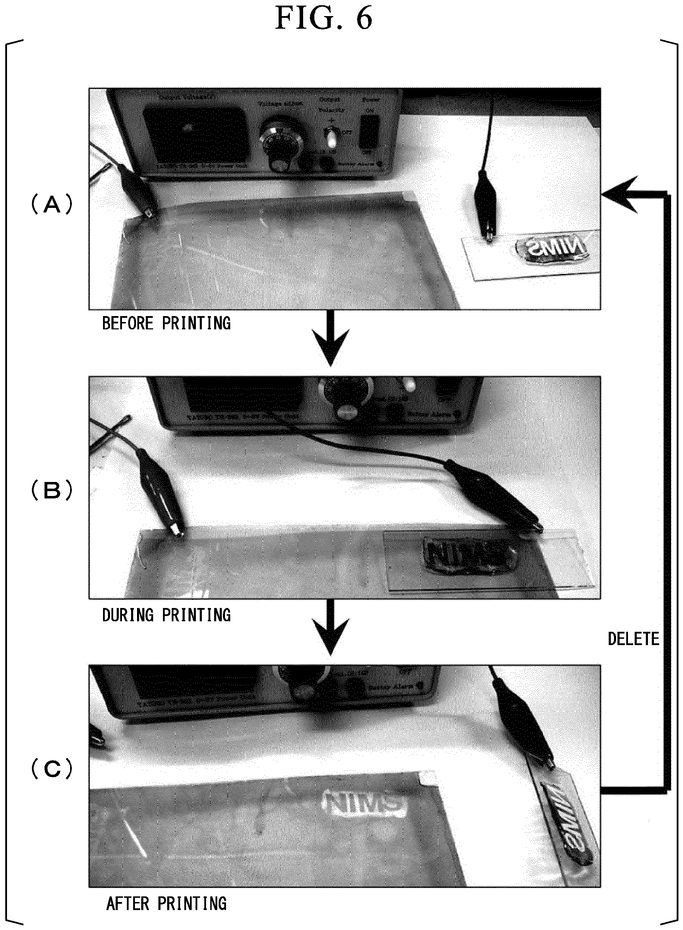

FIG. 6 is a photograph showing a printing process using the electronic printable medium of one example of the present invention, and the printed state and the deleted state of the electronic printable medium of the present invention. FIG. 6(A) is a photograph showing an electronic printable medium prior to printing. A thin sheet which is pictured widely toward the left front from the center front represents a printable electronic medium. A relatively small transparent plate in which a mirror writing pattern has been formed by the gel electrolyte, and which is pictured on the right side of the printable electronic media, represents an electronic print device. The device which is pictured over of the printable electronic medium, and which is connected with both the printable electronic media and the electronic print device via electrical clips represents a power source. The electronic printable medium in pre-printed state (or in the deleted state) exhibits a uniform concentration.

FIG. 6(B) is a photograph showing an electronic printable medium during printing. A predetermined voltage is applied to between the gel electrolyte layer and the organic-metallic hybrid polymer from the power source in the condition where the surface of the gel electrolyte layer of the electronic print device is allowed to come into contact with the surface of the organic-metallic hybrid polymer layer of the electronic printable medium satisfactorily. After the electronic print device is separated, a pattern formed by gel electrolyte layer of the electronic print device is transferred on the electronic printable medium, as shown in FIG. 6(C). By allowing the printed electronic printable medium to stand for a long time or by allowing the printed electronic printable medium to come into contact with the gel electrolyte, the pattern transferred in the aforementioned manner is deleted, and the electronic printable medium is returned to the state indicated in FIG. 6(A).

### [Suppression of disappearance of the printed pattern]

In the case where the pattern printed on an electronic printable medium has to be maintained for as long as possible without erasing the pattern, it is preferable that the surface of the organic-metallic hybrid polymer is sealed from the air. Specific examples of a method for sealing an electronic printable medium include a method in which an electronic printable medium on which a pattern has been printed is encapsulated in a transparent plastic bag by using a vacuum sealing device. In this case, in order to show a high contrast of the pattern that has been printed on the electronic printable medium, it is preferable that the medium is encapsulated in a state of being stacked on a white paper.

The rate of disappearance of color is strongly dependent on the level of sealing from the air. However, in the case where the electronic printable medium is completely sealed from the air by conducting the aforementioned encapsulation, the pattern which has been printed can be generally maintained about 5 days.

### [Industrial Applicability]

As described above, since the medium has a very simple configuration, an electronic printable medium having usability similar to a very thin paper can be obtained at a low cost. Furthermore, a multi-color print can be achieved. Moreover, the device capable of electronical printing on the medium also has a very simple configuration, and the process of electronical printing is simply conducted by applying a predetermined voltage without depending on the type of patterns. Therefore, it is possible to control the electronical printing easily, to print multiple copies easily, and to achieve high throughput. The electronic printable medium of the present invention has usability similar to a paper medium, it is also possible to provide a copy by using a usual electronic copy machine easily. Therefore, it is believed the present invention has a great deal of potential in industry.

### [Reference Signs List]

- 12:: Electronic printable medium;
- 14:: Electronic print device;
- 16:: Power source;
- 31:: Conductive sheet-shaped member;
- 32:: Organic-metallic hybrid polymer;
- 41:: Electrode layer;
- 42:: gel electrolyte layer;
- 43:: Insulating material

## Claims

1. An electronic printable medium comprising:
a conductive sheet-shaped member; and
an organic-metallic hybrid polymer deposited on the conductive sheet-shaped member, wherein
the organic-metallic hybrid polymer is deposited on both sides of the conductive sheet-shaped member, and
the organic-metallic hybrid polymer has a structure represented by the following general formula: 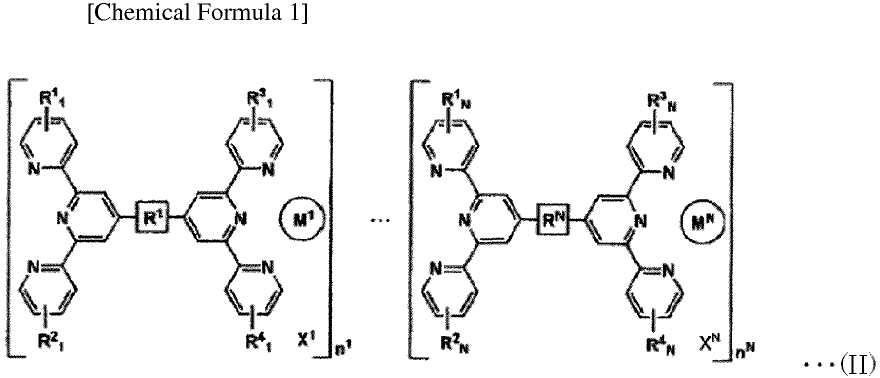
wherein N represents an integer of 2 or more; each of M¹ to M^{N} represents multiple types of metal ions having a various redox potential; each of X¹ to X^{N} independently represents a counter anion; each of R¹ to R^{N} independently represents a spacer containing a carbon atom and a hydrogen atom, or a spacer directly connecting two terpyridyl groups; each of R¹₁ to R¹_{N}, R²₁ to R²_{N}, R³₁ to R³_{N}, and R⁴₁ to R⁴_{N} independently represents a hydrogen atom or a substituent; and each of n¹ to n^{N} independently represents an integer of 2 or more which indicates a degree of polymerization.

2. The electronic printable medium according to Claim 1, wherein
the conductive sheet-shaped member has conductivity by itself.

3. A method of printing on electronic printable medium comprising:
allowing a conductive layer within an electronic print device in which the conductive layer and a surface of a gel electrolyte which is formed so as to correspond to a pattern to be printed and which is electrically connected with the conductive layer to come into contact with an electronic printable medium comprising a conductive sheet-shaped member and an organic-metallic hybrid polymer deposited on both sides of the conductive sheet-shaped member, and
applying a voltage between the conductive layer and the conductive sheet-shaped member of the electronic printable medium, thereby a color of the organic-metallic hybrid polymer is selectively changed in accordance with the pattern, wherein
the electronic printable medium and the electronic print device are separable from each other, and
the organic-metallic hybrid polymer has a structure represented by the following general formula: 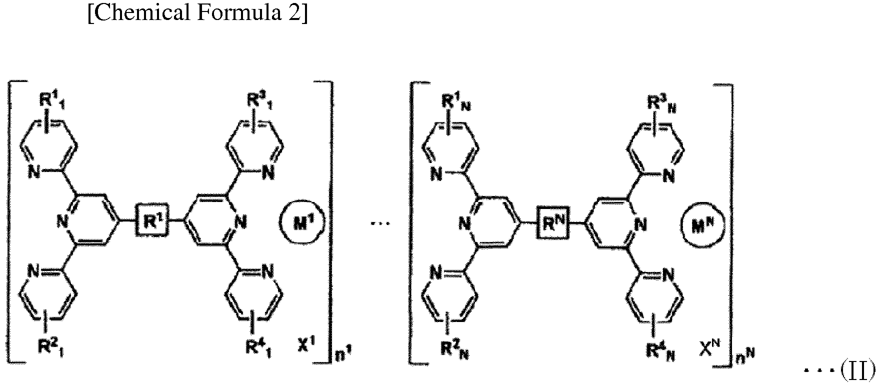
wherein N represents an integer of 2 or more; each of M¹ to M^{N} represents multiple types of metal ions having a various redox potential; each of X¹ to X^{N} independently represents a counter anion; each of R¹ to R^{N} independently represents a spacer containing a carbon atom and a hydrogen atom, or a spacer directly connecting two terpyridyl groups; each of R¹₁ to R¹_{N}, R²₁ to R²_{N}, R³₁ to R³_{N}, and R⁴₁ to R⁴_{N} independently represents a hydrogen atom or a substituent; and each of n¹ to n^{N} independently represents an integer of 2 or more which indicates a degree of polymerization.

4. The method of printing on electronic printable medium according to Claim 3,
further comprising
changing the voltage such that an electronic print is conducted in multiple colors.

5. A system comprising an electronic printable medium and an electronic print device, wherein
the electronic printable medium comprises:
a conductive sheet-shaped member; and
an organic-metallic hybrid polymer deposited on both sides of the conductive sheet-shaped member, and
the electronic print device comprises a conductive layer and a surface of a gel electrolyte layer which is formed so as to correspond to a pattern to be printed and which is electrically connected with the conductive layer, wherein the surface of the gel electrolyte surface layer is allowed to come into contact with the electronic printable medium, the electronic print device being operable such that, when a voltage is applied between the conductive layer and the conductive sheet-shaped member of the electronic printable medium, printing the pattern on the electronic printable medium takes place,
wherein
the electronic printable medium and the electronic print device are separable from each other, and
the organic-metallic hybrid polymer has a structure represented by the following general formula: 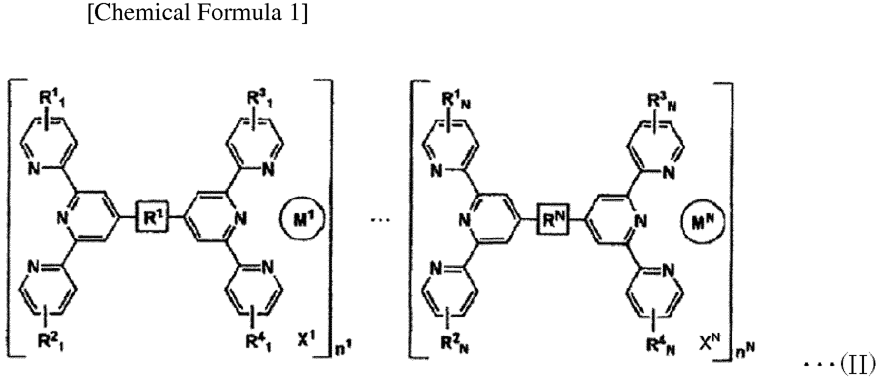
wherein N represents an integer of 2 or more; each of M¹ to M^{N} represents multiple types of metal ions having a various redox potential; each of X¹ to X^{N} independently represents a counter anion; each of R¹ to R^{N} independently represents a spacer containing a carbon atom and a hydrogen atom, or a spacer directly connecting two terpyridyl groups; each of R¹₁ to R¹_{N}, R²₁ to R²_{N}, R³₁ to R³_{N}, and R⁴₁ to R⁴_{N} independently represents a hydrogen atom or a substituent; and each of n¹ to n^{N} independently represents an integer of 2 or more which indicates a degree of polymerization.

6. A system comprising an electronic printable medium and an electronic print device, wherein
the electronic printable medium comprises:
a conductive sheet-shaped member; and
an organic-metallic hybrid polymer deposited on both sides of the conductive sheet-shaped member, and
the electronic print device comprises a conductive layer and a surface of a gel electrolyte layer which is formed so as to correspond to a pattern to be printed and which is electrically connected with the conductive layer, wherein the surface of the gel electrolyte layer is allowed to come into contact with the electronic printable medium, the electronic print device being operable such that, when a variable voltage is applied between the conductive layer and the conductive sheet-shaped member of the electronic printable medium, printing the pattern in a changeable color on the electronic printable medium takes place, wherein
the electronic printable medium and the electronic print device are separable from each other, and
the organic-metallic hybrid polymer has a structure represented by the following general formula: 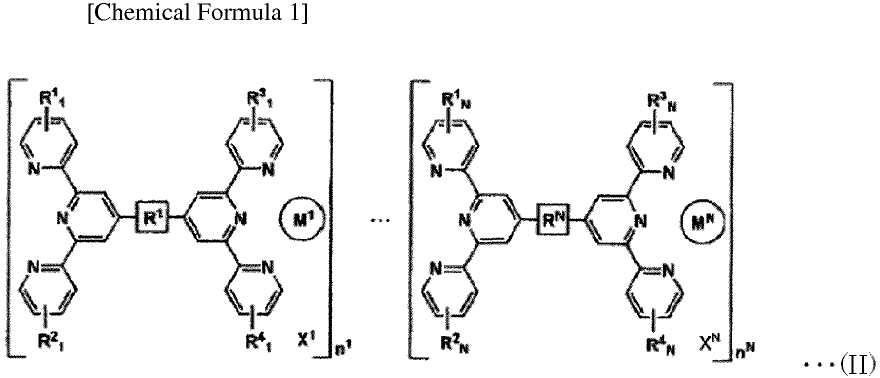
wherein N represents an integer of 2 or more; each of M¹ to M^{N} represents multiple types of metal ions having a various redox potential; each of X¹ to X^{N} independently represents a counter anion; each of R¹ to R^{N} independently represents a spacer containing a carbon atom and a hydrogen atom, or a spacer directly connecting two terpyridyl groups; each of R¹₁ to R¹_{N}, R²₁ to R²_{N}, R³₁ to R³_{N}, and R⁴₁ to R⁴_{N} independently represents a hydrogen atom or a substituent; and each of n¹ to n^{N} independently represents an integer of 2 or more which indicates a degree of polymerization.

## Patentansprüche

1. Elektronisches bedruckbares Medium, umfassend:
ein leitfähiges bahnmaterialartiges Element; und
ein metallorganisches Hybridpolymer, das auf dem leitfähigen bahnmaterialartigen Element abgeschieden ist, wobei
das metallorganische Hybridpolymer auf beiden Seiten des leitfähigen bahnmaterialartigen Elements abgeschieden ist, und
das metallorganische Hybridpolymer eine Struktur hat, die durch die nachstehend dargestellte allgemeine Formel repräsentiert wird: 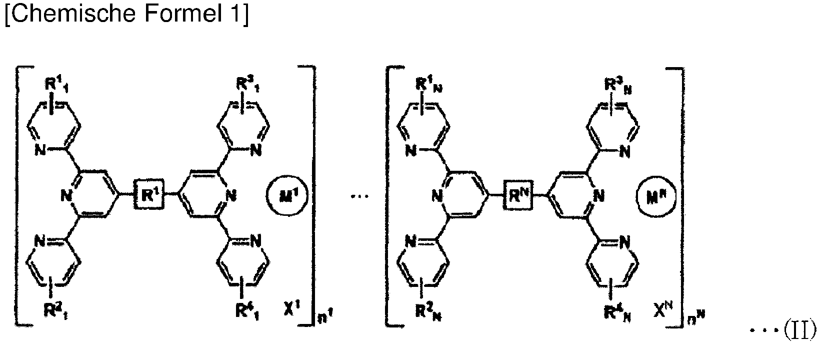
wobei N eine ganze Zahl von 2 oder größer repräsentiert; M¹ bis M^{N} jeweils mehrere Typen von Metallionen repräsentieren, die ein verschiedenes Redoxpotential haben; X¹ bis X^{N} jeweils unabhängig ein Gegenanion repräsentieren; R¹ bis R^{N} jeweils unabhängig einen Abstandhalter, der ein Kohlenstoffatom und ein Wasserstoffatom enthält, oder einen Abstandhalter repräsentieren, der zwei Terpyridylgruppen direkt miteinander verbindet; R¹₁ bis R¹_{N}, R²₁ bis R²_{N}, R³₁ bis R³_{N}, und R⁴₁ bis R⁴_{N} jeweils unabhängig ein Wasserstoffatom oder einen Substituenten repräsentieren; und n¹ bis n^{N} jeweils unabhängig eine ganze Zahl von 2 oder größer repräsentieren, die einen Grad der Polymerisierung angibt.

2. Elektronisches bedruckbares Medium gemäß Anspruch 1, wobei das leitfähige bahnmaterialartige Element selbst Leitfähigkeit aufweist.

3. Verfahren zum Bedrucken eines elektronischen bedruckbaren Mediums, umfassend:
Erlauben, dass eine leitfähige Schicht innerhalb eines elektronischen Druckgeräts, in dem die leitfähige Schicht und eine Oberfläche eines Gelelektrolyts, die so geformt ist, dass sie einem zu druckenden Muster entspricht, und die mit der leitfähigen Schicht elektrisch verbunden ist, mit einem elektronischen bedruckbaren Medium in Kontakt kommt, das ein leitfähiges bahnmaterialartiges Element und ein metallorganisches Hybridpolymer umfasst, das auf beiden Seiten des leitfähigen bahnmaterialartigen Elements abgeschieden ist, und
Anlegen einer Spannung zwischen der leitfähigen Schicht und dem leitfähigen bahnmaterialartigen Element des elektronischen bedruckbaren Mediums, wodurch eine Farbe des metallorganischen Hybridpolymers selektiv gemäß dem Muster verändert wird, wobei
das elektronische bedruckbare Medium und das elektronische Druckgerät voneinander trennbar sind, und
das metallorganische Hybridpolymer eine Struktur hat, die durch die nachstehend dargestellte allgemeine Formel repräsentiert wird: 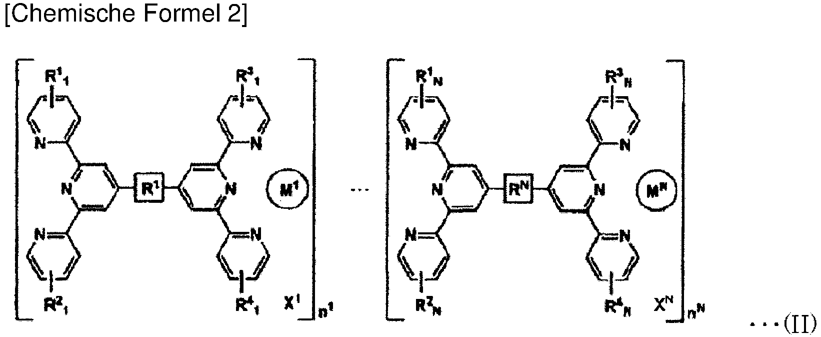
wobei N eine ganze Zahl von 2 oder größer repräsentiert; M¹ bis M^{N} jeweils mehrere Typen von Metallionen repräsentieren, die ein verschiedenes Redoxpotential haben; X¹ bis X^{N} jeweils unabhängig ein Gegenanion repräsentieren; R¹ bis R^{N} jeweils unabhängig einen Abstandhalter, der ein Kohlenstoffatom und ein Wasserstoffatom enthält, oder einen Abstandhalter repräsentieren, der zwei Terpyridylgruppen direkt miteinander verbindet; R¹₁ bis R¹_{N}, R²₁ bis R²_{N}, R³₁ bis R³_{N}, und R⁴₁ bis R⁴_{N} jeweils unabhängig ein Wasserstoffatom oder einen Substituenten repräsentieren; und n¹ bis n^{N} jeweils unabhängig eine ganze Zahl von 2 oder größer repräsentieren, die einen Grad der Polymerisierung angibt.

4. Verfahren zum Bedrucken eines elektronischen bedruckbaren Mediums gemäß Anspruch 3, ferner umfassend
Ändern der Spannung, sodass ein elektronischer Druck in mehreren Farben durchgeführt wird.

5. System, das ein elektronisches bedruckbares Medium und ein elektronisches Druckgerät umfasst, wobei
das elektronische bedruckbare Medium umfasst:
ein leitfähiges bahnmaterialartiges Element; und
ein metallorganisches Hybridpolymer, das auf beiden Seiten des leitfähigen bahnmaterialartigen Elements abgeschieden ist, und
das elektronische Druckgerät eine leitfähige Schicht und eine Oberfläche einer Gelelektrolytschicht umfasst, die so ausgebildet ist, dass sie einem zu druckenden Muster entspricht, und die mit der leitfähigen Schicht elektrisch verbunden ist, wobei der Oberfläche der Gelelektrolytschicht erlaubt wird, mit dem elektronischen bedruckbaren Medium in Kontakt zu kommen, wobei das elektronische Druckgerät so betreibbar ist, dass bei Anlegen einer Spannung zwischen der leitfähigen Schicht und dem leitfähigen bahnmaterialartigen Element des elektronischen bedruckbaren Mediums ein Drucken des Musters auf dem elektronischen bedruckbaren Medium erfolgt,
wobei
das elektronische bedruckbare Medium und das elektronische Druckgerät voneinander trennbar sind, und
das metallorganische Hybridpolymer eine Struktur hat, die durch die nachstehend dargestellte allgemeine Formel repräsentiert wird: 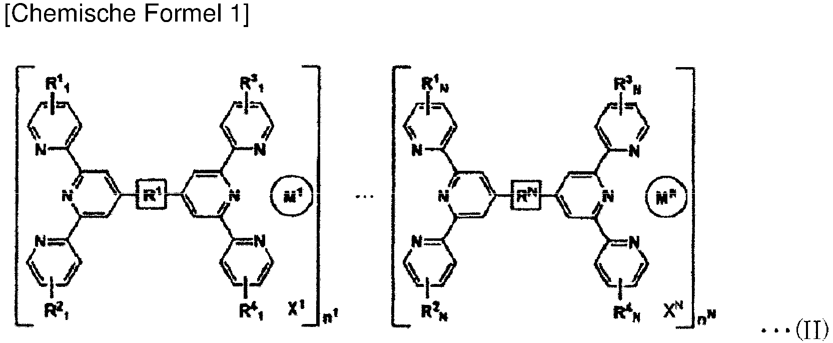
wobei N eine ganze Zahl von 2 oder größer repräsentiert; M¹ bis M^{N} jeweils mehrere Typen von Metallionen repräsentieren, die ein verschiedenes Redoxpotential haben; X¹ bis X^{N} jeweils unabhängig ein Gegenanion repräsentieren; R¹ bis R^{N} jeweils unabhängig einen Abstandhalter, der ein Kohlenstoffatom und ein Wasserstoffatom enthält, oder einen Abstandhalter repräsentieren, der zwei Terpyridylgruppen direkt miteinander verbindet; R¹₁ bis R¹_{N}, R²₁ bis R²_{N}, R³₁ bis R³_{N}, und R⁴₁ bis R⁴_{N} jeweils unabhängig ein Wasserstoffatom oder einen Substituenten repräsentieren; und n¹ bis n^{N} jeweils unabhängig eine ganze Zahl von 2 oder größer repräsentieren, die einen Grad der Polymerisierung angibt.

6. System, das ein elektronisches bedruckbares Medium und ein elektronisches Druckgerät umfasst, wobei
das elektronische bedruckbare Medium umfasst:
ein leitfähiges bahnmaterialartiges Element; und
ein metallorganisches Hybridpolymer, das auf beiden Seiten des leitfähigen bahnmaterialartigen Elements abgeschieden ist, und
das elektronische Druckgerät eine leitfähige Schicht und eine Oberfläche einer Gelelektrolytschicht umfasst, die so ausgebildet ist, dass sie einem zu druckenden Muster entspricht, und die mit der leitfähigen Schicht elektrisch verbunden ist, wobei der Oberfläche der Gelelektrolytschicht erlaubt wird, mit dem elektronischen bedruckbaren Medium in Kontakt zu kommen, wobei das elektronische Druckgerät so betreibbar ist, dass bei Anlegen einer variablen Spannung zwischen der leitfähigen Schicht und dem leitfähigen bahnmaterialartigen Element des elektronischen bedruckbaren Mediums ein Drucken des Musters in einer veränderbaren Farbe auf dem elektronischen bedruckbaren Medium erfolgt, wobei
das elektronische bedruckbare Medium und das elektronische Druckgerät voneinander trennbar sind, und
das metallorganische Hybridpolymer eine Struktur hat, die durch die nachstehend dargestellte allgemeine Formel repräsentiert wird: 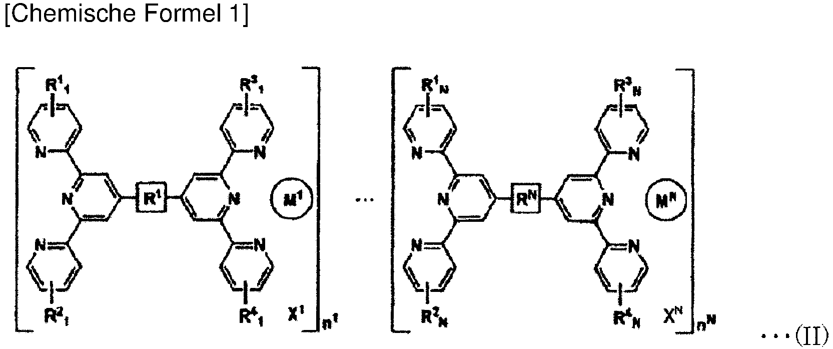
wobei N eine ganze Zahl von 2 oder größer repräsentiert; M¹ bis M^{N} jeweils mehrere Typen von Metallionen repräsentieren, die ein verschiedenes Redoxpotential haben; X¹ bis X^{N} jeweils unabhängig ein Gegenanion repräsentieren; R¹ bis R^{N} jeweils unabhängig einen Abstandhalter, der ein Kohlenstoffatom und ein Wasserstoffatom enthält, oder einen Abstandhalter repräsentieren, der zwei Terpyridylgruppen direkt miteinander verbindet; R¹₁ bis R¹_{N}, R²₁ bis R²_{N}, R³₁ bis R³_{N}, und R⁴₁ bis R⁴_{N} jeweils unabhängig ein Wasserstoffatom oder einen Substituenten repräsentieren; und n¹ bis n^{N} jeweils unabhängig eine ganze Zahl von 2 oder größer repräsentieren, die einen Grad der Polymerisierung angibt.

## Revendications

1. Support imprimable par impression électronique comprenant :
un élément conducteur en forme de feuille ; et
un polymère hybride organométallique déposé sur l'élément conducteur en forme de feuille, dans lequel
le polymère hybride organométallique est déposé sur les deux faces de l'élément conducteur en forme de feuille, et
le polymère hybride organométallique a une structure représentée par la formule générale suivante : 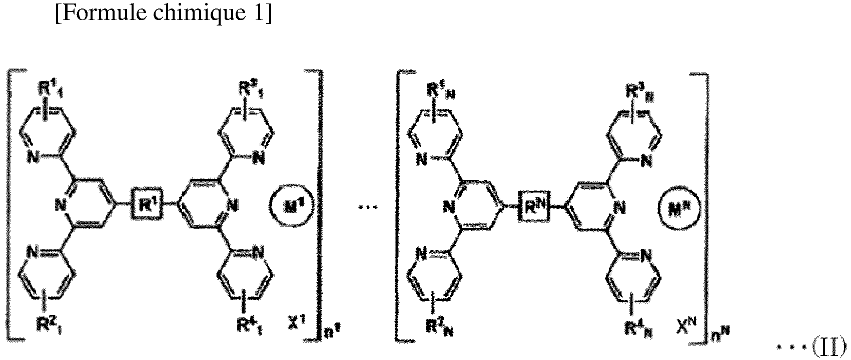
dans laquelle N représente un nombre entier valant 2 ou plus ; M¹ à M^{N} représentent chacun un parmi divers types d'ions métalliques ayant divers potentiels redox ; X¹ à X^{N} représentent chacun indépendamment un anion opposé ; R¹ à R^{N} représentent chacun indépendamment un espaceur contenant un atome de carbone et un atome d'hydrogène, ou un espaceur reliant directement deux groupes terpyridyle ; R¹₁ à R¹_{N}, R²₁ à R²_{N}, R³₁ à R³_{N}, et R⁴₁ à R⁴_{N} représentent chacun indépendamment un atome d'hydrogène ou un substituant ; et n¹ à n^{N} représentent chacun indépendamment un nombre entier valant 2 ou plus qui indique un degré de polymérisation.

2. Support imprimable par impression électronique selon la revendication 1, dans lequel l'élément conducteur en forme de feuille a une conductivité par lui-même.

3. Procédé d'impression sur support imprimable par impression électronique, comprenant les étapes consistant à :
faire entrer en contact une couche conductrice, à l'intérieur d'un dispositif d'impression électronique dans lequel la couche conductrice et une surface d'un électrolyte en gel qui est formé de manière à correspondre à un motif à imprimer et qui est connecté électriquement à la couche conductrice, avec un support imprimable par impression électronique comprenant un élément conducteur en forme de feuille et un polymère hybride organométallique déposé sur les deux faces de l'élément conducteur en forme de feuille, et
appliquer une tension entre la couche conductrice et l'élément conducteur en forme de feuille du support imprimable par impression électronique, ce par quoi une couleur du polymère hybride organométallique est modifiée sélectivement en conformité avec le motif, dans lequel
le support imprimable par impression électronique et le dispositif d'impression électronique sont séparables l'un de l'autre, et
le polymère hybride organométallique a une structure représentée par la formule générale suivante : 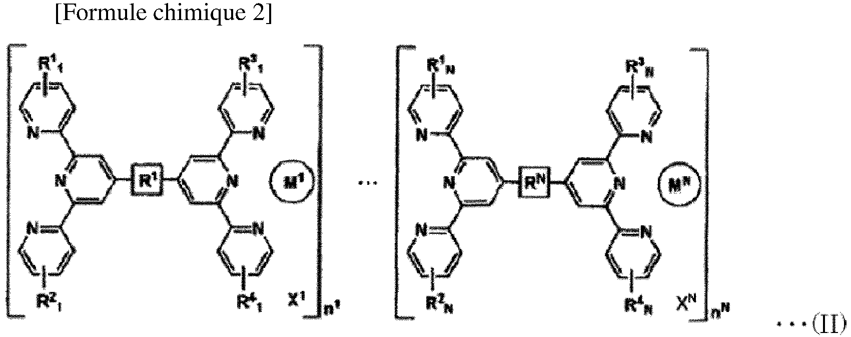
dans laquelle N représente un nombre entier valant 2 ou plus ; M¹ à M^{N} représentent chacun un parmi divers types d'ions métalliques ayant divers potentiels redox ; X¹ à X^{N} représentent chacun indépendamment un anion opposé ; R¹ à R^{N} représentent chacun indépendamment un espaceur contenant un atome de carbone et un atome d'hydrogène, ou un espaceur reliant directement deux groupes terpyridyle ; R¹₁ à R¹_{N}, R²₁ à R²_{N}, R³₁ à R³_{N}, et R⁴₁ à R⁴_{N} représentent chacun indépendamment un atome d'hydrogène ou un substituant ; et n¹ à n^{N} représentent chacun indépendamment un nombre entier valant 2 ou plus qui indique un degré de polymérisation.

4. Procédé d'impression sur support imprimable par impression électronique selon la revendication 3, comprenant en outre
modifier la tension de sorte qu'une impression électronique est exécutée en plusieurs couleurs.

5. Système comprenant un support imprimable par impression électronique et un dispositif d'impression électronique, dans lequel
le support imprimable par impression électronique comprend :
un élément conducteur en forme de feuille ; et
un polymère hybride organométallique déposé sur les deux faces de l'élément conducteur en forme de feuille, et
le dispositif d'impression électronique comprend une couche conductrice et une surface d'une couche d'électrolyte en gel qui est formée de manière à correspondre à un motif à imprimer et qui est connectée électriquement à la couche conductrice, dans lequel la surface de la couche de surface d'électrolyte en gel est faite entrer en contact avec le support imprimable par impression électronique, le dispositif d'impression électronique étant utilisable de telle façon que lorsqu'une tension est appliquée entre la couche conductrice et l'élément conducteur en forme de feuille du support imprimable par impression électronique, l'impression du motif a lieu sur le support imprimable par impression électronique,
dans lequel
le support imprimable par impression électronique et le dispositif d'impression électronique sont séparables l'un de l'autre, et
le polymère hybride organométallique a une structure représentée par la formule générale suivante : 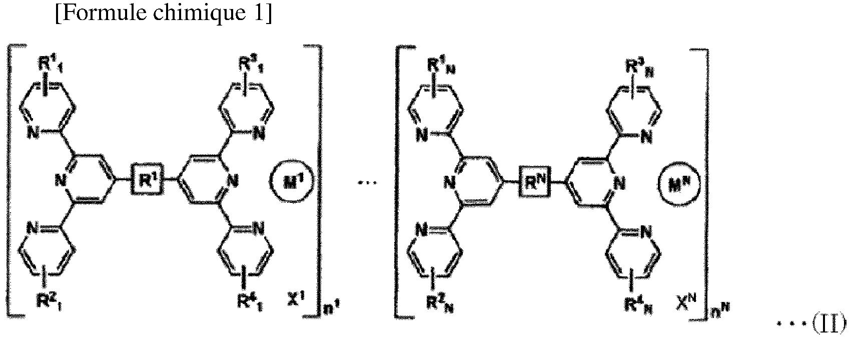
dans laquelle N représente un nombre entier valant 2 ou plus ; M¹ à M^{N} représentent chacun un parmi divers types d'ions métalliques ayant divers potentiels redox ; X¹ à X^{N} représentent chacun indépendamment un anion opposé ; R¹ à R^{N} représentent chacun indépendamment un espaceur contenant un atome de carbone et un atome d'hydrogène, ou un espaceur reliant directement deux groupes terpyridyle ; R¹₁ à R¹N, R²₁ à R²_{N}, R³₁ à R³_{N}, et R⁴₁ à R⁴_{N} représentent chacun indépendamment un atome d'hydrogène ou un substituant ; et n¹ à n^{N} représentent chacun indépendamment un nombre entier valant 2 ou plus qui indique un degré de polymérisation.

6. Système comprenant un support imprimable par impression électronique et un dispositif d'impression électronique, dans lequel
le support imprimable par impression électronique comprend :
un élément conducteur en forme de feuille ; et
un polymère hybride organométallique déposé sur les deux faces de l'élément conducteur en forme de feuille, et
le dispositif d'impression électronique comprend une couche conductrice et une surface d'une couche d'électrolyte en gel qui est formée de manière à correspondre à un motif à imprimer et qui est connectée électriquement à la couche conductrice, dans lequel la surface de la couche d'électrolyte en gel est faite entrer en contact avec le support imprimable par impression électronique, le dispositif d'impression électronique étant utilisable de telle façon que lorsqu'une tension variable est appliquée entre la couche conductrice et l'élément conducteur en forme de feuille du support imprimable par impression électronique, l'impression du motif en une couleur variable a lieu sur le support imprimable par impression électronique, dans lequel
le support imprimable par impression électronique et le dispositif d'impression électronique sont séparables l'un de l'autre, et
le polymère hybride organométallique a une structure représentée par la formule générale suivante : 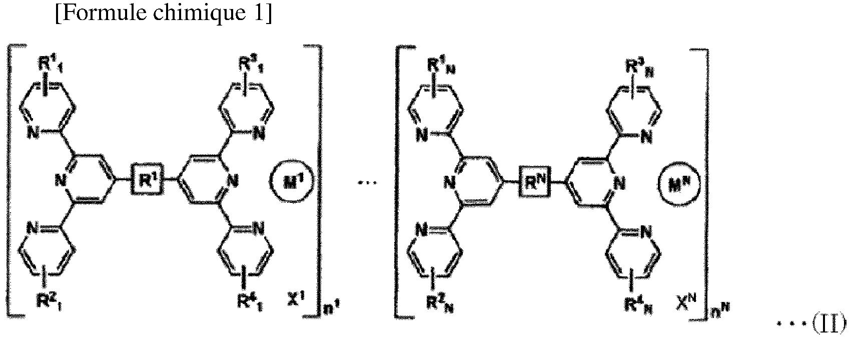
dans laquelle N représente un nombre entier valant 2 ou plus ; M¹ à M^{N} représentent chacun un parmi divers types d'ions métalliques ayant divers potentiels redox ; X¹ à X^{N} représentent chacun indépendamment un anion opposé ; R¹ à R^{N} représentent chacun indépendamment un espaceur contenant un atome de carbone et un atome d'hydrogène, ou un espaceur reliant directement deux groupes terpyridyle ; R¹₁ à R¹_{N}, R²₁ à R²_{N}, R³₁ à R³_{N}, et R⁴₁ à R⁴_{N} représentent chacun indépendamment un atome d'hydrogène ou un substituant ; et n¹ à n^{N} représentent chacun indépendamment un nombre entier valant 2 ou plus qui indique un degré de polymérisation.
